# EUROPÄISCHE PATENTANMELDUNG

(11) **EP 4 299 412 A1**
(43) Veröffentlichungstag der Anmeldung: **03.01.2024**
(21) Anmeldenummer: 23179493.4
(22) Anmeldetag: 15.06.2023
(51) Int. Cl.: B61L 27/10, B60L 50/53, B60L 53/65, B60L 53/67, B60L 53/64, B60L 53/68

(54) **VERFAHREN ZUM STEUERN EINER LEISTUNGSAUFNAHME EINER SCHIENENFAHRZEUGFLOTTE**

(30) Priorität: 30.06.2022 DE 102022206678
(71) Anmelder: Siemens Mobility GmbH, 81739 München (DE)
(72) Erfinder: Probst, Sebastian, 90408 Nürnberg (DE); Burg, Wilhelm, 96052 Bamberg (DE); Scheibe, Hagen, 85521 Ottobrunn (DE)
(74) Vertreter: Siemens Patent Attorneys

(57) **Zusammenfassung**

Die Erfindung betrifft ein Verfahren zum Steuern einer elektrischen Leistungsaufnahme einer Schienenfahrzeugflotte, wobei die Schienenfahrzeugflotte eine Mehrzahl Schienenfahrzeuge umfasst, die jeweils zumindest einen elektrischen Energiespeicher für eine Versorgung eines Antriebssystems des Schienenfahrzeugs mit elektrischer Energie aufweisen, und wobei die Energiespeicher mittels eines elektrischen Versorgungsnetzes und/oder elektrischer Ladestationen entlang eines von der Schienenfahrzeugflotte befahrenen Schienennetzes geladen werden. Das Verfahren ist dadurch gekennzeichnet, dass in einer zentralen Datenbasis zumindest statische und zeitlich variierende Informationen aktuell in einem Fahrbetrieb befindlicher Schienenfahrzeuge der Mehrzahl Schienenfahrzeuge und statische Informationen bezüglich eines jeweiligen Fahrplans und/oder Umlaufplans und/oder Fahrzeugeinsatzplans der aktuell betriebenen Schienenfahrzeuge zusammengeführt werden, mittels der zusammengeführten Informationen und unter Berücksichtigung einer Leistungsaufnahme der Schienenfahrzeugflotte von einer Ladeplanungseinrichtung ein fahrzeugindividueller Ladeplan für das Laden der Energiespeicher der aktuell in einem Fahrbetrieb befindlichen Schienenfahrzeuge bestimmt wird, und das Laden der Energiespeicher der aktuell in einem Fahrbetrieb befindlichen Schienenfahrzeuge abhängig von dem fahrzeugindividuell bestimmten Ladeplan durchgeführt wird.

## Beschreibung

Der Betreiber einer Schienenfahrzeugflotte nutzt oftmals das Schienennetz eines Netzbetreibers und zahlt diesem abhängig von der Nutzung des Schienennetzes ein bestimmtes Nutzungsentgelt. Ergänzend zu dem Schienennetz stellt der Netzbetreiber im Regelfall auch elektrische Energie bereit, welche die Schienenfahrzeuge der Flotte über entlang des Schienennetzes geführte Oberleitungen oder gesonderte Stromschienen eines Versorgungsnetzes aufnehmen und für deren Betrieb nutzen. Für die aufgenommene Energie zahlt der Flottenbetreiber dem Netzbetreiber ebenfalls ein verbrauchsabhängiges Entgelt. Ergänzend zu einem Arbeitspreis mit einem bestimmten Betrag pro aufgenommener Energiemenge, beispielsweise pro kWh (Kilowattstunde), umfasst das Preismodell des Netzbetreibers häufig einen Leistungspreis mit einem bestimmten Betrag pro aufgenommener Energie, beispielsweise kW (Kilowatt) pro Zeiteinheit (Monat oder Jahr), wobei der Betrag des Leistungspreises beispielsweise proportional zu der höchsten aufgenommenen Energie ansteigt, wobei die aufgenommene Energie über einen bestimmten Zeitraum, beispielsweise fünfzehn Minuten, gemittelt wird.

Das Nutzungsentgelt für das Schienennetz und das Energieentgelt stellen für den Flottenbetreiber wesentliche Kostenfaktoren für den Betrieb der Schienenfahrzeugflotte dar. Insbesondere ist der Flottenbetreiber dabei bestrebt, die Energieentgelte zu reduzieren, beispielsweise durch Einsatz energieeffizienterer Schienenfahrzeuge und/oder durch einen energieeffizienteren Betrieb der Schienenfahrzeuge unter Nutzung von Fahrerassistenzsystemen.

Eine weitere Möglichkeit der Reduzierung der Energieentgelte besteht prinzipiell in einer gleichmäßigeren Energieaufnahme der Flotte und damit einem niedrigeren Leistungspreis, welche durch Verringern oder sogar Vermeiden von Zeiträumen hoher Energieaufnahme erreicht werden können. Dabei ist insbesondere zu beachten, dass eine während eines Zeitraums hoher Energieaufnahme erfolgende Rückspeisung elektrischer Energie in das Versorgungsnetz durch die Schienenfahrzeuge bei der Bemessung des Leistungspreises üblicherweise keine Berücksichtigung findet, sodass eine Kompensierung durch eine parallele Rückspeisung als möglicher Ansatz für eine gleichmäßigere Energieaufnahme der Flotte zunächst nicht geeignet ist.

Eine gleichmäßigere Energieaufnahme wird zudem mit Einführung von Schienenfahrzeugen mit elektrischen Energiespeichern für den Antrieb weiter erschwert. Elektrische Energiespeicher auf dem Schienenfahrzeug, auch als Antriebs- oder Traktionsbatterien bezeichnet, ermöglichen vorteilhaft einen Betrieb auf nicht- oder nur teilelektrifizierten Strecken, also Strecken ohne oder nur in Abschnitten vorhandene Oberleitungen oder gesonderte Stromschienen. Mit solchen Energiespeichern ausgerüstete Schienenfahrzeug eignen sich als Ersatz von bislang eingesetzten Schienenfahrzeugen mit Verbrennungskraftmaschinen für deren Energieversorgung.

Aufgrund der nur begrenzt in den elektrischen Energiespeichern speicherbaren Energiemenge müssen diese während des Betriebs des Schienenfahrzeugs in bestimmten zeitlichen Abständen oder Entfernungen wieder mit elektrischer Energie geladen werden. Das Laden der Energiespeicher erfolgt dabei beispielsweise während einer Fahrt des Schienenfahrzeugs auf einem elektrifizierten Streckenabschnitt oder an bestimmten Ladestationen, wobei letztere vorzugsweise im Bereich von Haltestationen angeordnet sind. Ein Ladevorgang, sei es beim Befahren eines elektrifizierten Streckenabschnitts, während eines Halts in einem solchen Streckenabschnitt oder während eines Halts an einer speziellen Ladestation in einem nicht elektrifizierten Streckenabschnitt, erfolgt dabei mit dem Ziel, in dem begrenzten Zeitraum einer Verbindung mit dem Versorgungsnetz eine Energiemenge aufzunehmen, die ausreichend für die nachfolgende Fahrt zu einem nächsten elektrifizierten Streckenabschnitt oder zu einer nächsten Ladestation ist. Insbesondere wenn mehrere Schienenfahrzeuge der Flotte gleichzeitig oder nur wenig zeitlich versetzt einen Ladevorgang mit einer jeweils hohen Leistungsaufnahme durchführen, resultiert dies in höheren Leistungspreisen und wirkt damit dem Ziel des Flottenbetreibers einer Reduzierung speziell der Leistungspreise nachteilig entgegen.

Aus dem Dokument DE 10 2019 217 148 A1 ist ein Verfahren zum Betreiben einer Schienenfahrzeugflotte umfassend mehrere Schienenfahrzeuge, wobei jedes Schienenfahrzeug eingerichtet ist, zur Fortbewegung elektrische Energie von einer fahrzeugexternen Stromversorgung aufzunehmen. Eine Energiebedarfsgröße eines jeden Schienenfahrzeugs wird an eine Flottensteuereinrichtung übermittelt und eine Aufnahmeobergrenze wird abhängig von den erhaltenen Energiebedarfsgrößen zur Vermeidung von Leistungsspitzen für wenigstens eines der Schienenfahrzeuge festgelegt.

Aufgabe der Erfindung ist es daher, ein Verfahren sowie ein System anzugeben, mittels welchen Zeiträume hoher Leistungsaufnahme während des Betriebs einer Schienenfahrzeugflotte reduziert oder vermieden werden können.

Diese Aufgabe wird durch die jeweiligen Merkmale der unabhängigen Patentansprüche gelöst. Weiterbildungen sind in jeweiligen abhängigen Patentansprüchen angegeben.

Ein erster Aspekt der Erfindung betrifft ein Verfahren zum Steuern einer elektrischen Leistungsaufnahme einer Schienenfahrzeugflotte, wobei die Schienenfahrzeugflotte eine Mehrzahl Schienenfahrzeuge umfasst, die jeweils zumindest einen elektrischen Energiespeicher für eine Versorgung eines Antriebssystems des Schienenfahrzeugs mit elektrischer Energie aufweisen, und wobei die Energiespeicher mittels eines elektrischen Versorgungsnetzes und/oder elektrischer Ladestationen entlang eines von der Schienenfahrzeugflotte befahrenen Schienennetzes geladen werden. Das Verfahren ist dadurch gekennzeichnet, dass in einer zentralen Datenbasis zumindest statische und zeitlich variierende Informationen aktuell in einem Fahrbetrieb befindlicher Schienenfahrzeuge der Mehrzahl Schienenfahrzeuge und statische Informationen bezüglich eines jeweiligen Fahrplans und/oder Umlaufplans und/oder Fahrzeugeinsatzplans der aktuell betriebenen Schienenfahrzeuge zusammengeführt werden, mittels der zusammengeführten Informationen und unter Berücksichtigung einer Leistungsaufnahme der Schienenfahrzeugflotte von einer Ladeplanungseinrichtung ein fahrzeugindividueller Ladeplan für das Laden der Energiespeicher der aktuell in einem Fahrbetrieb befindlichen Schienenfahrzeuge bestimmt wird, und das Laden der Energiespeicher der aktuell in einem Fahrbetrieb befindlichen Schienenfahrzeuge abhängig von dem fahrzeugindividuell bestimmten Ladeplan durchgeführt wird.

Die Erfindung basiert auf der Erkenntnis, dass eine Reduzierung bzw. Begrenzung der an einen Netzbetreiber zu zahlenden Leistungspreise vorteilhaft ermöglicht wird, wenn eine Planung des Ladens der jeweils mit zumindest einem elektrischen Energiespeicher ausgestatteten Schienenfahrzeuge auf einer diesen Schienenfahrzeugen hierarchisch übergeordneten Flottenebene erfolgt, auf welcher als ein Kriterium die Leistungsaufnahme der Flotte berücksichtigt werden kann.

Hierdurch können die zu ladenden elektrischen Energiespeicher der Schienenfahrzeuge nicht nur eine vorstehend beschriebene temporäre Erhöhung der Leistungsaufnahme der Flotte bewirken, welche nachteilig zu einem höheren Leistungspreis führen kann, sondern im Gegenteil die Leistungsaufnahme der Flotte harmonisieren bzw. verstetigen, um vorteilhaft Kostenreduzierungen aufgrund niedrigerer Leistungspreise zu verwirklichen. Die Ladeplanung kann dabei insbesondere hinsichtlich eines Verrechnungsmodells, insbesondere speziell eines Verrechnungsmodell für den Leistungspreis des Netzbetreibers optimiert werden.

Ein erfindungsgemäßer fahrzeugindividueller Ladeplan umfasst beispielsweise einen Zeitpunkt für den Beginn eines nächsten Ladevorgangs sowie eine von der zu ladenden Energiemenge abhängige Dauer des Ladevorgangs und/oder eine Leistungsaufnahme während des Ladevorgangs. Vorzugsweise umfasst der Ladeplan mehrere und im Einklang mit dem Fahrplan bzw. Umlaufplan des jeweiligen Schienenfahrzeugs stehende zukünftige Zeitpunkte für einen jeweiligen Beginn eines Ladevorgangs. Jedoch kann auch während eines bereits begonnenen Ladevorgangs eines Schienenfahrzeugs mittels des Ladeplans beispielsweise temporär die Leistungsaufnahme reduziert werden, wenn eine hohe Leistungsaufnahme der Flotte festgestellt wird. Der Ladeplan kann somit sowohl für eine langfristige als auch für eine kurzfristige Planung des Ladens von Energiespeichern der Schienenfahrzeuge verwendet werden.

Der Umlaufplan definiert beispielsweise eine Zuweisung von Schienenfahrzeugen zu Fahrten sowie den von diesen zu fahrenden Routen, insbesondere alle Fahrten eines jeweiligen Schienenfahrzeugs für dessen fahrplanmäßigen Betrieb. Der Umlaufplan dient damit als Grundlage für die Einsatzplanung und Fahrplanung des jeweiligen Schienenfahrzeugs bzw. der Schienenfahrzeugflotte. Umlaufpläne können einen oder mehrere Betriebstage umfassen.

Die zentrale Datenbasis, in welcher die verschiedenen Informationen zusammengeführt werden, ist vorzugsweise dem Betreiber der Schienenfahrzeugflotte zugeordnet. Dies ermöglich insbesondere, in der zentralen Datenbasis alle für die Bestimmung der Ladepläne der Schienenfahrzeuge relevanten Informationen zusammenzuführen, um diese entsprechend erfindungsgemäß berücksichtigen zu können.

Nach einer ersten Weiterbildung des Verfahrens werden in der zentralen Datenbasis ergänzend statische und zeitlich variierende Informationen zukünftig in einen Fahrbetrieb übergehender weiterer Schienenfahrzeuge der Mehrzahl Schienenfahrzeuge und statische Informationen bezüglich des jeweiligen Fahrplans und/oder Umlaufplans und/oder Fahrzeugeinsatzplans der weiteren Schienenfahrzeuge zusammengeführt, werden die statischen und zeitlich variierenden Informationen der weiteren Schienenfahrzeuge von der Ladeplanungseinrichtung für die Bestimmung des fahrzeugindividuellen Ladeplans für das Laden der Energiespeicher der aktuell in einem Fahrbetrieb befindlichen Schienenfahrzeuge ergänzend berücksichtigt, wird mittels der zusammengeführten Informationen von der Ladeplanungseinrichtung ergänzend ein fahrzeugindividueller Ladeplan für das Laden der Energiespeicher der weiteren Schienenfahrzeuge unter Berücksichtigung einer Leistungsaufnahme der Schienenfahrzeugflotte bestimmt, und wird das Laden der Energiespeicher der weiteren Schienenfahrzeug abhängig von dem fahrzeugindividuell bestimmten Ladeplan durchgeführt.

Neben den Informationen der aktuell in einem Fahrbetrieb befindlichen Schienenfahrzeuge der Mehrzahl Schienenfahrzeuge werden nach dieser Weiterbildung somit auch Informationen von in Vorbereitung eines Fahrbetriebs befindlichen weiteren Schienenfahrzeugen der Mehrzahl zumindest einen elektrischen Energiespeicher aufweisenden Schienenfahrzeugen in der zentralen Datenbasis zusammengeführt. Diese Schienenfahrzeuge befinden sich insbesondere in einem Abstellbetrieb, örtlich beispielsweise in Depots oder Abstellgleisen des Schienennetzes, in welchem sie mit dem Versorgungsnetz oder einer Ladestation verbunden sind. Die umfassenderen Informationen werden für die Bestimmung des jeweiligen Ladeplans sowohl der bereits im Fahrbetrieb befindlichen Schienenfahrzeuge als auch der weiteren Schienenfahrzeuge berücksichtigt, wobei die Ladepläne für die weiteren Schienenfahrzeuge insbesondere einen jeweiligen Zeitpunkt eines Ladevorgangs in Vorbereitung eines nachfolgenden Fahrbetriebs definieren. Vorteilhaft wird hierdurch eine Ladeplanung ermöglicht, welche die Leistungsaufnahme einer größeren Anzahl Schienenfahrzeuge der Flotte berücksichtigt.

Nach einer weiteren Weiterbildung des Verfahrens werden in der zentralen Datenbasis ergänzend statische und zeitlich variierende Informationen von in einem Fahrbetrieb befindlichen anderen Schienenfahrzeugen der Schienenfahrzeugflotte ohne elektrische Energiespeicher, wobei das Antriebssystem des jeweiligen anderen Schienenfahrzeugs mittels des Versorgungsnetzes mit elektrischer Energie versorgt wird, und statische Informationen bezüglich des jeweiligen Fahrplans und/oder Umlaufplans und/oder Fahrzeugeinsatzplans der anderen Schienenfahrzeuge zusammengeführt, und werden die statischen und zeitlich variierenden Informationen der anderen Schienenfahrzeug von der Ladeplanungseinrichtung für die Bestimmung des fahrzeugindividuellen Ladeplans für das Laden der Energiespeicher der aktuell in einem Fahrbetrieb befindlichen Schienenfahrzeuge und insbesondere der zukünftig in einen Fahrbetrieb übergehenden weiteren Schienenfahrzeuge ergänzend berücksichtigt.

Neben den Informationen der aktuell in einem Fahrbetrieb befindlichen Schienenfahrzeuge sowie insbesondere der zukünftig in einen Fahrbetrieb übergehenden weiteren Schienenfahrzeuge werden somit auch Informationen von anderen in einem Fahrbetrieb befindlichen Schienenfahrzeugen in der zentralen Datenbasis zusammengeführt und für die Bestimmung der Ladepläne für die Schienenfahrzeuge und insbesondere die weiteren Schienenfahrzeuge berücksichtigt. Die anderen Schienenfahrzeuge der Flotte weisen dabei keine elektrischen Energiespeicher auf, sondern können und werden ausschließlich auf elektrifizierten Streckenabschnitten des Schienennetzes betrieben. Die während des Fahrbetriebs Schwankungen unterliegende Leistungsaufnahme dieser anderen Schienenfahrzeuge der Flotte, welche insbesondere anhand der Fahrpläne und Kenntnisse der von diesen befahrenen Strecken in einem bestimmten Umfang abschätzbar ist, ermöglicht vorteilhaft, eine größere Sicherheit bei der Abschätzung einer Leistungsaufnahme der Flotte zu erzielen, um entsprechend die Ladepläne zu bestimmen.

Nach einer weiteren Weiterbildung des Verfahrens werden in der zentralen Datenbasis ergänzend zeitlich variierende Informationen bezüglich des jeweiligen Fahrplans und/oder Umlaufplans und/oder Fahrzeugeinsatzplans der Schienenfahrzeuge zusammengeführt.

Obwohl Fahrpläne sowie Umlaufpläne der Schienenfahrzeuge einer Flotte über einen bestimmten Zeitraum betrachtet als statisch gelten können, können Situationen auftreten, aufgrund derer Abweichungen von einem vorgegebenen Plan erforderlich sind. Eine solche Situation ist beispielsweise eine Störung in einem Streckenabschnitt des Schienennetzes, wobei die Störung durch das Schienennetz selbst, durch Schienenfahrzeuge oder durch andere Einflüsse verursacht worden sein kann. Derartige zeitlich variierende Informationen, welche die statischen Informationen von Fahrplänen und/oder Umlaufplänen temporär verändern, werden vorteilhaft ergänzend für die Bestimmung der Ladepläne berücksichtigt.

Nach einer weiteren Weiterbildung des Verfahrens wird der fahrzeugindividuelle Ladeplan ergänzend für das Entladen der Energiespeicher der aktuell in einem Fahrbetrieb befindlichen Schienenfahrzeuge bestimmt, und wird das Entladen der Energiespeicher der aktuell in einem Fahrbetrieb befindlichen Schienenfahrzeuge abhängig von dem fahrzeugindividuell bestimmten Ladeplan durchgeführt.

Beispielsweise kann ein einen elektrifizierten Streckenabschnitt befahrendes Schienenfahrzeug trotz der netzseitig verfügbaren Energie aus dem Energiespeicher versorgt werden, um hierdurch die Leistungsaufnahme der Flotte aus dem Versorgungsnetz während eines bestimmten Zeitraums zu verringern. Die während dieses Zeitraums durch Entladen des Energiespeichers verbrauchte Energie kann während eines nachfolgenden Zeitraum mit einer niedrigeren Leistungsaufnahme der Flotte entsprechend dem Ladeplan wieder aus dem Versorgungsnetz in den Energiespeicher geladen werden.

Nach einer weiteren Weiterbildung des Verfahrens bestimmt der fahrzeugindividuelle Ladeplan ergänzend einen Schwellenwert für eine Leistungsaufnahme der aktuell in einem Fahrbetrieb befindlichen Schienenfahrzeuge und insbesondere der zukünftig in einen Fahrbetrieb übergehenden weiteren Schienenfahrzeuge, und wird die Leistungsaufnahme der aktuell in einem Fahrbetrieb befindlichen Schienenfahrzeuge und insbesondere der zukünftig in einen Fahrbetrieb übergehenden weiteren Schienenfahrzeuge abhängig von dem fahrzeugindividuell bestimmten Schwellenwert gesteuert.

Beispielsweise kann ein einen elektrifizierten Streckenabschnitt befahrendes Schienenfahrzeug Energie aus dem Versorgungsnetz beziehen, jedoch nur bis zu einer mittels des Ladeplans vorgegebenen Höhe der Leistungsaufnahme, welche durch den Schwellenwert festgelegt ist. Sofern das Schienenfahrzeug bzw. dessen Antriebssystem mehr elektrische Energie als die nach dem Schwellenwert des Ladeplans zugestandene Leistungsaufnahme für den Betrieb benötigt, wird die Energiedifferenz dem Energiespeicher entnommen, wodurch dieser entladen wird. Sofern das Schienenfahrzeug anschließend weniger als die nach dem Schwellenwert zugestandene Leistungsaufnahme für den Betrieb benötigt, wird der Energiespeicher mittels der Energiedifferenz wieder geladen. Vorteilhaft kann hierdurch eine Steuerung der Leistungsaufnahme der Flotte verwirklicht werden, die speziell bei einer Versorgung mittels eines Versorgungsnetzes eine nur geringe Belastung für die Energiespeicher der Schienenfahrzeuge darstellt.

Ebenso kann beispielsweise die Leistungsaufnahme eines weiteren Schienenfahrzeugs, dessen Energiespeicher in Vorbereitung eines nachfolgenden Fahrbetriebs geladen wird, insbesondere temporär mittels des Schwellenwerts begrenzt werden.

Nach einer weiteren Weiterbildung des Verfahrens umfassen die Informationen der aktuell in einem Fahrbetrieb befindlichen Schienenfahrzeugs und insbesondere der zukünftig in einen Fahrbetrieb übergehenden weiteren Schienenfahrzeuge als statische Informationen eine oder mehrere der Informationen eine Identifikation, ein Fahrzeugtyp, und als zeitlich variierende Informationen eine oder mehrere der Informationen eine aktuelle Position, eine aktuelle Geschwindigkeit, einen aktuellen und/oder erwarteten Leistungsbedarf, aktuelle und/oder historische Energieverbrauchswerte, einen aktuellen Ladezustand des zumindest einen Energiespeichers.

Die Schienenfahrzeugidentifikation, beispielsweise eine individuelle Fahrzeugnummer, dient insbesondere einer eindeutigen Zuordnung des Schienenfahrzeugs zu den statischen Informationen des Fahrplans und/oder Umlaufplans, sodass ein individueller Ladeplan für jedes der Mehrzahl Schienenfahrzeuge bestimmt werden kann. Aus dem Fahrzeugtyp, beispielsweise eine Angabe der Baureihe, können Informationen über das Antriebssystem sowie den zumindest einen Energiespeicher des Schienenfahrzeugs hervorgehen, welche in der zentralen Datenbasis beispielsweise bereits gespeichert sind. Die zeitlich variierenden Informationen ermöglichen, Abschätzungen bezüglich eines aktuellen sowie zukünftigen Energieverbrauchs treffen zu können, aus denen ein Bedarf für ein Laden des zumindest einen Energiespeichers des jeweiligen Schienenfahrzeugs abgeleitet und entsprechend über den Ladeplan gesteuert werden kann. Insbesondere Informationen bezüglich eines erwarteten Leistungsbedarf bzw. daraus folgenden Energieverbrauchs können dabei beispielsweise einem Steuerungssystem des Schienenfahrzeugs entstammen und von diesem beispielsweise zu für die zentrale Datenbasis relevante Informationen zusammengefasst werden.

Nach einer weiteren Weiterbildung des Verfahrens weisen die Schienenfahrzeuge der Schienenfahrzeugflotte und die zentrale Datenbasis und/oder die Ladeplanungseinrichtung jeweils eine Kommunikationsschnittstelle auf, wobei über die Kommunikationsschnittstellen die statischen und zeitlich variierenden Informationen der Schienenfahrzeuge zu der zentralen Datenbasis und die bestimmten fahrzeugindividuellen Ladepläne oder jeweilige Informationen zu den Ladeplänen zu den Schienenfahrzeugen übertragen werden.

Die Kommunikationsschnittstellen sind dabei vorzugsweise als gesicherte und/oder priorisierte Funkschnittstellen ausgestaltet, über welche die jeweils relevanten Informationen funkbasiert übertragen werden. Dabei erfolgt die Übertragung der jeweiligen Informationen beispielsweise gemäß einem bestimmten Protokoll sowie mit einer bestimmten Periodizität. Der jeweilige Ladeplan kann beispielsweise Informationen ausschließlich bezüglich eines nächsten Ladevorgangs oder auch mehrere zukünftige Ladevorgänge des Schienenfahrzeugs umfassen. Die in dem Ladeplan umfassten Informationen können in geeigneter Weise der fahrzeugführenden Person angezeigt werden, beispielsweise über eine optische Ausgabeeinheit, sodass sofern der Ladevorgang nicht automatisiert gesteuert wird, die fahrzeugführende Person diesen zu dem bestimmten Zeitpunkt manuell initiieren und beenden kann.

Nach einer weiteren Weiterbildung des Verfahrens weisen die zentrale Datenbasis und eine zentrale Fahrplan- und Umlaufplan-Datenbasis jeweils eine Kommunikationsschnittstelle zu der Ladeplanungseinrichtung auf, wobei über die Kommunikationsschnittstellen die statischen und insbesondere zeitlich variierenden Informationen bezüglich eines jeweiligen Fahrplans und/oder Umlaufplans und/oder Fahrzeugeinsatzplans der aktuell betriebenen Schienenfahrzeuge und insbesondere der zukünftig in einen Fahrbetrieb übergehenden weiteren Schienenfahrzeuge und/oder der anderen Schienenfahrzeuge der Schienenfahrzeugflotte übertragen werden.

Der zentralen Datenbasis wird damit ein direkter Zugriff auf eine weitere zentrale Datenbasis des Flottenbetreibers gegeben, in welcher die Fahrpläne und/oder Umlaufpläne der Flotte gespeichert sind. Die mittels dieser Datenbasis verwalteten Informationen können dabei beispielsweise auch temporäre Änderungen von Fahrplänen umfassen, welche, sofern solche Änderungen auftreten, der zentralen Datenbasis über die Kommunikationsschnittstellen mitgeteilt werden. Die Kommunikationsschnittstellen können als Funkschnittstellen sowie alternativ als leitungsgebundene Schnittstellen ausgestaltet.

Ein zweiter Aspekt der Erfindung betrifft eine Anordnung zur Steuerung einer elektrischen Leistungsaufnahme einer Schienenfahrzeugflotte, wobei die Anordnung zumindest eine zentrale Datenbasis und eine Ladeplanungseinrichtung umfasst, wobei zumindest eine Mehrzahl Schienenfahrzeuge der Schienenfahrzeugflotte kommunikationstechnisch mit der zentralen Datenbasis und/oder der Ladeplanungseinrichtung verbunden ist, wobei die Schienenfahrzeuge jeweils zumindest einen elektrischen Energiespeicher für eine Versorgung eines Antriebssystems mit elektrischer Energie aufweisen, welche mittels eines elektrischen Versorgungsnetzes und/oder elektrischer Ladestationen entlang eines von der Schienenfahrzeugflotte befahrenen Schienennetzes ladbar sind, und wobei die Anordnung ausgestaltet ist, das Verfahren nach dem ersten Aspekt der Erfindung durchzuführen.

Ein dritter Aspekt der Erfindung betrifft ein Schienenfahrzeug einer Schienenfahrzeugflotte, wobei das Schienenfahrzeug zumindest ein Antriebssystem und zumindest einen elektrischen Energiespeicher, wobei der zumindest eine Energiespeicher einer Versorgung des Antriebssystems mit elektrischer Energie dient, eine Kommunikationsschnittstelle zum Übertragen statischer und zeitlich variierender Informationen an eine der Schienenfahrzeugflotte zugeordnete Anordnung, wobei die Anordnung zumindest eine zentrale Datenbasis und eine Ladeplanungseinrichtung umfasst, und zum Empfangen eines Ladeplans, wobei der Ladeplan von der Ladeplanungseinrichtung mittels in der zentralen Datenbasis zusammengeführter Informationen des Schienenfahrzeugs sowie statischer und zeitlich variierender Informationen aktuell in einem Fahrbetrieb befindlicher weiterer Schienenfahrzeuge der Schienenfahrzeugflotte, statischer Informationen bezüglich eines Fahrplans und/oder Umlaufplan und/oder Fahrzeugeinsatzplans des Schienenfahrzeugs und unter Berücksichtigung einer Leistungsaufnahme der Schienenfahrzeugflotte bestimmt wird, und eine Schienenfahrzeugsteuerung zum Steuern des Ladens des zumindest einen Energiespeichers abhängig von dem empfangenen Ladeplan, umfasst.

Nachfolgend wird die Erfindung anhand eines Ausführungsbeispiels erläutert. Dabei zeigt:

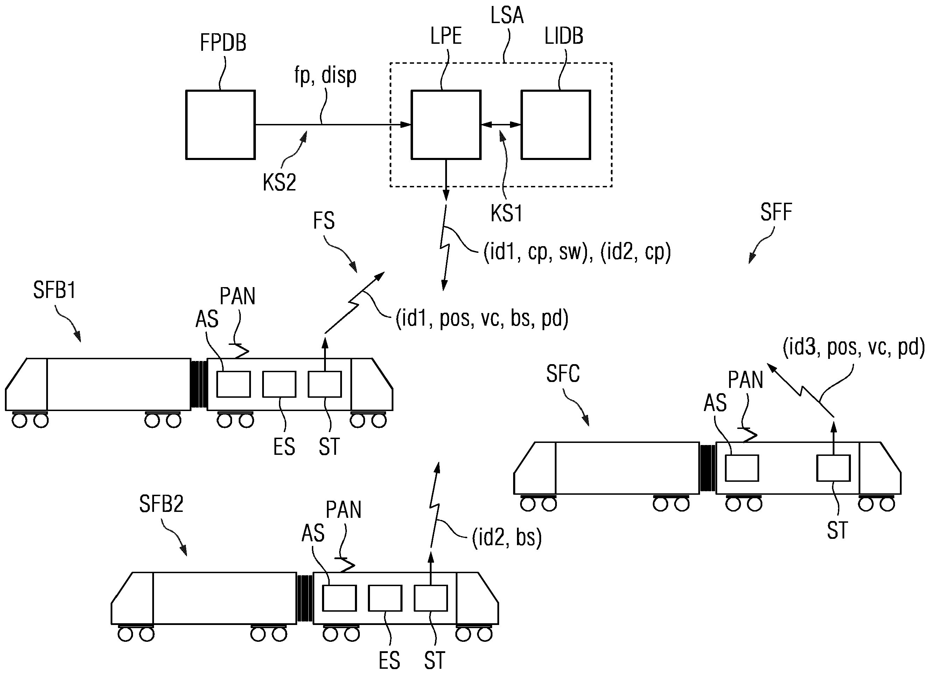

- FIG 1: eine Schienenfahrzeugflotte in Kommunikation mit einer erfindungsgemäßen Anordnung.

FIG 1 zeigt schematisch eine Schienenfahrzeugflotte SFF eines Flottenbetreibers, dessen Mehrzahl Schienenfahrzeuge ein nicht dargestelltes Schienennetz, beispielsweise für die Personenbeförderung, befahren. Die Flotte SFF umfasst beispielhaft eine erste Anzahl Schienenfahrzeuge, stellvertretend dargestellt durch das erste Schienenfahrzeug SFB1, mit jeweils zumindest einem elektrischen Energiespeicher BS für die Versorgung des Antriebssystems AS des Schienenfahrzeugs, welche sich zu dem beispielhaft betrachteten Zeitpunkt in einem aktiven Fahrbetrieb befinden, d.h. einen jeweiligen Streckenabschnitt des Schienennetzes gemäß einem vorgegebenen Fahrplan befahren. Ferner umfasst die Flotte SFF eine zweite Anzahl Schienenfahrzeuge, stellvertretend dargestellt durch das zweite Schienenfahrzeug SFB2, welche entsprechend der ersten Anzahl Schienenfahrzeuge SFB1 ausgestaltet sind, welche sich zu dem betrachteten Zeitpunkt jedoch nicht in einem Fahrbetrieb, sondern beispielsweise in einem Abstellbetrieb befinden. Schließlich umfasst die Flotte SFF eine dritte Anzahl Schienenfahrzeuge, stellvertretend dargestellt durch das dritte Schienenfahrzeug SFC, welche nicht über einen elektrischen Energiespeicher verfügen.

Das von der Flotte SFF befahrene Schienennetz umfasst elektrifizierte Strecken, die beispielsweise zwischen größeren Städten liegen, sowie teilelektrifizierte Strecken, die beispielsweise ausgehend von solchen Städten in mehr ländliche Regionen des von dem Schienennetz abgedeckten geografischen Gebiets führen. Ergänzend kann das Schienennetz ebenso nicht elektrifizierte Strecken umfassen, welche jedoch nicht weiter betrachtet werden. Elektrifizierte Strecken zeichnen sich dadurch aus, dass sie über die gesamte Strecke mittels eines elektrischen Versorgungsnetzes in Form entlang der Gleise der Strecken geführter Oberleitungen mit elektrischer Energie versorgt werden. Die Oberleitungen können beispielsweise in Europa Wechselspannungen von 25kV, 50Hz bzw. 15kV, 16.7Hz oder Gleichspannungen von 3kV bzw. 1.5kV führen. Die elektrische Energie wird von den Schienenfahrzeugen über mit den Oberleitungen elektrisch verbundene Stromabnehmer PAN aufgenommen und für den Antrieb sowie die Versorgung von Hilfsbetrieben des jeweiligen Schienenfahrzeugs genutzt.

Teilelektrifizierte Strecken zeichnen sich hingegen dadurch aus, dass nicht die gesamte Strecke elektrifiziert ist, sondern nur bestimmte Streckenabschnitte, beispielsweise wiederum im Umfeld von Städten. Solche teilelektrifizierten Strecken können nur von Schienenfahrzeugen befahren werden, die sowohl mit einer Oberleitung oder einer Stromschiene verbunden werden können, um in elektrifizierten Streckenabschnitten Energie von dieser aufzunehmen, als auch eine fahrzeugeigene Energieversorgung aufweisen, um mittels der erzeugten elektrischen Energie nicht elektrifizierte Streckenabschnitte befahren zu können. Als fahrzeugeigene Energiequelle dienen bislang vorwiegend Verbrennungskraftmaschinen, die mittels eines von diesen angetriebenen Generators elektrische Energie erzeugen. Im Zuge einer gewünschten Reduzierung von Treibhausgasen werden Schienenfahrzeuge mit Verbrennungskraftmaschinen vermehrt durch solche mit elektrischen Energiespeichern ersetzt. Solche Energiespeicher sind vorzugsweise als Batterien bzw. Traktionsbatterien ausgestaltet, deren gespeicherte elektrische Energie der Versorgung des Antriebs- bzw. Traktionssystems sowie der Hilfsbetriebe der Schienenfahrzeuge während des Befahrens nicht elektrifizierter Streckenabschnitte dient. Geladen werden die Energiespeicher ES während des Befahrens von elektrifizierten Streckenabschnitten sowie, sofern erforderlich, an speziellen Ladestationen, die vorzugsweise im Bereich von Haltestationen entlang der Strecke angeordnet sind. Mit dem Laden während des Befahrens eines elektrifizierten Streckenabschnitts oder eines Halts an einer Ladestation wird den Energiespeichern eine Energiemenge zugeführt, die für das Befahren eines nachfolgenden nicht elektrifizierten Streckenabschnitts bis zu einer nächsten Ladestation oder einem nächsten elektrifizierten Streckenabschnitt ausreichend ist.

Die ersten und zweiten Schienenfahrzeuge SFB1, SFB2 der FIG 1 weisen somit jeweils einen oder mehrere elektrische Energiespeicher ES auf, in denen gespeicherte elektrische Energie insbesondere der Versorgung des Antriebssystems AS dient. Das Antriebssystem AS umfasst eine Anzahl Antriebsmotoren sowie einen oder mehrere die Antriebsmotoren speisende Stromrichter, typischerweise so genannte Pulswechselrichter (PWR). Abhängig von der Versorgungsspannung des Versorgungsnetzes sind gegebenenfalls ergänzend ein Transformator sowie ein oder mehrere Gleichrichter, typischerweise so genannte Vierquadrantensteller (4QS), für eine Wandlung der netzseitigen hohen Wechselspannung in eine niedrigere Gleichspannung erforderlich. Der Gleichrichter speist ausgangsseitig einen Gleichspannungszwischenkreis, aus welchem wiederum der bzw. die Stromrichter eingangsseitig gespeist werden. Ebenfalls mit dem Gleichspannungszwischenkreis sind der bzw. die Energiespeicher ES, beispielsweise direkt oder über einen Gleichspannungswandler, mit dem Gleichspannungszwischenkreis des Antriebssystems AS verbunden. Der bzw. die Energiespeicher ES werden damit aus dem Gleichspanungszwischenkreis des Antriebssystems AS geladen, wobei die elektrische Energie hierfür über den Stromabnehmer PAN aus dem Versorgungsnetz oder eine Ladestation bezogen wird, und speisen die gespeicherte elektrische Energie in den Gleichspannungszwischenkreis ein. Eine insbesondere dem Antriebssystem AS zugeordnete Steuerung ST steuert die Funktionen der verschiedenen Wandler, Steller und Richter und damit auch das Laden und Entladen des bzw. der Energiespeicher ES des jeweiligen Schienenfahrzeugs SFB1, SFB2. Ebenso dient diese Steuerung ST einer Erfassung des Zustands der verschiedenen Komponenten des Antriebssystems AS, insbesondere eines jeweiligen Ladezustands des einen oder der mehreren Energiespeicher ES, sowie der Erfassung des Zustands des Schienenfahrzeugs SFB1, SFB2 während des Fahrbetriebs, insbesondere eine aktuelle Position und Geschwindigkeit.

Die Steuereinrichtungen ST der Schienenfahrzeuge SFB1, SFB2 sind über eine Funkschnittstelle FS mit einer zentralen Ladeplanungseinrichtung LPE kommunikationstechnisch verbunden. Hierzu weisen die Schienenfahrzeuge SFB1, SFB2 eine jeweils mit der Steuereinrichtung ST verbundene und nicht speziell dargestellte Sende-/Empfangseinrichtung einschließlich einer Antenne auf. Ebenso ist die Ladeplanungseinrichtung LPE mit einer ebenfalls nicht dargestellten Sende-/Empfangseinrichtung einschließlich zumindest einer Antenne bzw. einem mehrere solche Einrichtungen und Antennen aufweisenden Funknetz verbunden.

Über die Funkschnittstelle FS werden Informationen zwischen der Ladeplanungseinrichtung LPE und den Schienenfahrzeugen SFB1,SFB2 übertragen.

Die Ladeplanungseinrichtung LPE kann als eine gesonderte bauliche Einheit, insbesondere als eine Recheneinheit mit einer Anzahl Mikroprozessoren zur Informationsverarbeitung, ausgestaltet sein. Vorzugsweise ist die Ladeplanungseinrichtung LPE jedoch als eine von mehreren Funktionen bzw. Applikationen eines Servers bzw. Serversystems, insbesondere eines Cloud-Servers bzw. Cloud-Serversystems, welcher bzw. welches einer Verwaltung und Steuerung der Flotte SFF dient, ausgestaltet. Kommunikationstechnisch bzw. über eine Kommunikationsschnittstelle KS1 verbunden ist die Ladeplanungseinrichtung LPE ferner mit einer zentralen Datenbasis LIDB, in welcher für die Ladeplanung der Schienenfahrzeuge SFB1, SFB2 der Flotte relevante Informationen temporär gespeichert werden. Die zentrale Datenbasis LIDB kann wiederum als eine gesonderte bauliche Einheit ausgestaltet sein, vorzugsweise ist diese jedoch als Teil eines mehrere Datenbasen umfassenden zentralen Datenspeichers, insbesondere eines Cloud-Datenspeichers bzw. Cloud-Datenspeichersystems, ausgestaltet. Zusammen bilden die Ladeplanungseinrichtung LPE und die Datenbasis LIDB eine Anordnung LSA, mittels welcher die Leistungsaufnahme der Flotte SFF gesteuert wird.

Ergänzend ist die Ladeplanungseinrichtung LPE bzw. die Anordnung LSA kommunikationstechnisch bzw. über eine Kommunikationsschnittstelle KS2 mit einer weiteren zentralen Datenbasis FPDB verbunden, in welcher Fahrpläne und/oder Umlaufpläne und/oder Fahrzeugeinsatzpläne aller Schienenfahrzeuge der Flotte SFF gespeichert sind und in welcher diese Pläne erforderlichenfalls geändert bzw. angepasst werden. Derartige Änderungen bestehender Pläne wird auch als Disposition bezeichnet. Informationen bezüglich der Fahrpläne fp bzw. Umlaufpläne sowie gegebenenfalls durchgeführter Dispositionen disp werden der Ladeplanungseinrichtung LPE von der weiteren zentralen Datenbasis FPDB über eine geeignete Kommunikationsschnittstelle zur Verfügung gestellt. Diese Informationen werden beispielsweise in regelmäßigen zeitlichen Abständen übertragen und können beispielsweise vollständige Pläne und Dispositionen oder auch nur Änderungen gegenüber zuvor kommunizierten Fassungen der Pläne umfassen. Sofern sinnvoll oder erforderlich, können die von der weiteren zentralen Datenbasis FPDB bereitgestellten Informationen von der Ladeplanungseinrichtung LPE, gegebenenfalls nach vorheriger Verarbeitung durch die Ladeplanungseinrichtung LPE, in der zentralen Datenbasis LIDB gespeichert werden, sodass unmittelbar auf die Informationen zugegriffen werden kann. Auch die weitere zentrale Datenbasis FPDB zum Speichern und Verwalten von Plänen kann entsprechend der zentralen Datenbasis LIDB als eine gesonderte bauliche Einheit ausgestaltet sein, vorzugsweise ist diese jedoch ebenfalls als Teil eines zentralen Datenspeichers, insbesondere eines Cloud-Datenspeichers bzw. Cloud-Datenspeichersystems, ausgestaltet.

Von den Schienenfahrzeugen der ersten Anzahl Schienenfahrzeuge SFB1 werden in beispielsweise regelmäßigen zeitlichen Abständen statische und zeitlich variable Informationen über die Funkschnittstelle FS zu der Ladeplanungseinrichtung LPE bzw. der Anordnung LSA übertragen. Diese Informationen umfassen beispielsweise eine fahrzeugindividuelle Identifikation id, mittels welcher in der Ladeplanungseinrichtung LPE eine direkte Verknüpfung mit dem für dieses Schienenfahrzeug SFB1 aktuell geltenden Fahrplan bzw. Umlaufplan hergestellt werden kann. Ferner umfassen die übertragenen Informationen beispielsweise eine aktuelle Position pos des Schienenfahrzeugs SFB1 auf der befahrenen Strecke, eine aktuelle Geschwindigkeit vc, einen aktuellen Ladestand bs des bzw. der Energiespeicher ES des Schienenfahrzeugs SFB1 sowie, sofern verfügbar, ein zukünftig erwarteter Leistungsbedarf pd. Letztere Information bezüglich des erwarteten Leistungs- bzw. Energiebedarfs pd kann beispielsweise der Steuereinrichtung ST entstammen, welche auf Basis der eigenen Kenntnis des noch zu befahrenen Streckenabschnitts sowie der einzuhaltenden Fahrplans eine Abschätzung der hierfür erforderlichen Energiemenge trifft. Die von der ersten Anzahl Schienenfahrzeuge SFB1 empfangenen Informationen werden in der zentralen Datenbasis LIDB für eine Weiterverarbeitung durch die Ladeplanungseinrichtung LPE gespeichert.

Basierend auf den in der zentralen Datenbasis LIDB zusammengeführten Informationen der ersten Anzahl Schienenfahrzeuge sowie der weiteren zentralen Datenbasis FPDB bestimmt die Ladeplanungseinrichtung LPE für jedes der ersten Anzahl Schienenfahrzeuge SFB1 einen fahrzeugindividuellen Ladeplan cp, welcher von der Ladeplanungseinrichtung LPE bzw. der Anordnung LSA unter ergänzender Angabe der Identifikation id1 des Schienenfahrzeugs SFB1 über die Funkschnittstelle FS übertragen werden. Der Ladeplan cp definiert dabei beispielsweise einen Zeitpunkt für den Beginn eines nächsten Ladevorgangs sowie eine von der zu ladenden Energiemenge abhängige Dauer des Ladevorgangs und/oder eine Leistungsaufnahme während des Ladevorgangs. Ergänzend kann der Ladeplan cp zudem zukünftige Zeitpunkte für einen jeweiligen Beginn eines Ladevorgangs, dessen Dauer und/oder Leistungsaufnahme umfassen. Alternativ oder ergänzend kann der Ladeplan cp auch beispielsweise eine Reduzierung bzw. Begrenzung der Leistungsaufnahme in einem bereits begonnenen Ladevorgang eines Schienenfahrzeugs SFB1 bewirken. Dies kann beispielsweise mittels eines von der Ladeplanungseinrichtung LPE bestimmten Schwellenwerts sw erfolgen, welcher als Bestandteil des Ladeplans cp eine maximal erlaubte Leistungsaufnahme durch das Schienenfahrzeug SFB1 während des Ladevorgangs angibt. Eine entsprechende Begrenzung der Leistungsaufnahme mittels eines bestimmten Schwellenwerts kann beispielsweise ergänzend auch erfolgen, während das Schienenfahrzeug SFB1 einen elektrifizierten Streckenabschnitt des Schienennetzes befährt. In diesem Fall wird die Differenz zwischen der aufnehmbaren Leistung und der benötigten Leistung dem Energiespeicher ES des Schienenfahrzeugs SFB1 entnommen.

Die Ladeplanungseinrichtung LPE bestimmt den Ladeplan cp des Schienenfahrzeugs SFB1 unter Berücksichtigung einer Leistungsaufnahme der Flotte, insbesondere mit dem Ziel, die Leistungsaufnahme der Flotte gemittelt über einen bestimmten Zeitraum unterhalb eines vorgegebenen Schwellenwerts zu halten. Dieser vorgegebene Schwellenwert entspricht dabei beispielsweise einem bestimmten Betrag bzw. einer bestimmten Erhöhung des Betrags eines zu vergütenden Leistungspreises gemäß dem Verrechnungsmodell des Netzbetreibers. Mittels der zusammengeführten Informationen kann die Ladeplanungseinrichtung LPE dabei die jeweiligen Zeitpunkte, Zeiträume sowie die Leistungsaufnahme während des Ladens der Schienenfahrzeuge SFB1 bestimmen, um beispielsweise in Zeiträumen hoher Leistungsaufnahme eine temporäre Reduzierung unter Nutzung der in den Energiespeichern gespeicherten elektrischen Energie zu bewirken. Ein Zeitraum hoher Leistungsaufnahme kann beispielsweise ein paralleles Anfahren mehrerer Schienenfahrzeuge nach einem Halt an einer jeweiligen Haltestation sein. Während dieses Zeitraums kann mittels des Ladeplans cp eine zeitliche Verschiebung eines Ladevorgangs eines anderen Schienenfahrzeugs so lange bewirkt werden, bis die Leistungsaufnahme der Flotte SFF wieder geringer ist. Entsprechend kann auch ein Schwellenwert sw bewirken, dass die Leistungsaufnahme eines oder mehrerer andere Schienenfahrzeuge temporär reduziert wird.

Für die Bestimmung der Ladepläne cp und gegebenenfalls von Schwellenwerten sw verwendet die Ladeplanungseinrichtung LPE einen Algorithmus, welcher einerseits hinsichtlich der Leistungsaufnahme der Flotte SFF optimiert ist, andererseits jedoch sicherstellt, dass die Energiespeicher ES derart geladen werden, dass die Schienenfahrzeuge entsprechend ihren vorgegebenen Fahr- bzw. Umlaufplänen eingesetzt werden können. Vorzugsweise berücksichtigt dieser Algorithmus dabei ergänzend zu den aktuellen Informationen auch historische Daten und Erkenntnisse, und ist als ein Lernalgorithmus ausgestaltet. Insbesondere aufgrund der überwiegend festen Struktur der Fahrpläne bzw. Umlaufpläne können historische Daten vorteilhaft durch einen solchen Algorithmus genutzt werden, da bestimmte Fahrsituation und Ladesituationen mit einer hohen Wahrscheinlichkeit wiederkehrend auftreten und entsprechend hinsichtlich der gewünschten Optimierung behandelt werden können.

Ergänzend zu einer Berücksichtigung von Informationen der aktuell bereits in einem Fahrbetrieb befindlichen Schienenfahrzeuge SFB1 der ersten Anzahl Schienenfahrzeuge für die Bestimmung der Ladepläne cp können vorteilhaft auch Informationen von nicht bzw. erst in Zukunft in einen Fahrbetrieb übergehenden Schienenfahrzeugen SFB2 der zweiten Anzahl Schienenfahrzeuge der Flotte SFF berücksichtigt werden. Hierfür werden von diesen Schienenfahrzeugen SFB2, wie in der FIG 1 dargestellt, beispielsweise wiederum eine fahrzeugindividuelle Identifikation id2 sowie ein aktueller Ladestand bs des Energiespeichers ES zu der Ladeplanungseinrichtung LPE übertragen. Basierend auf diesen Informationen, dem jeweils zugeordneten Fahrplan, Umlaufplan bzw. Fahrzeugeinsatzplan sowie den weiteren Informationen bestimmt die Ladeplanungseinrichtung LPE einen Ladeplan cp für das Schienenfahrzeug SFB2 und berücksichtigt entsprechend auch die ergänzenden Informationen der zweiten Anzahl Schienenfahrzeuge für die Bestimmung der Ladepläne cp der ersten Anzahl Schienenfahrzeuge.

Ebenso werden bei der Bestimmung der Ladepläne cp sowie gegebenenfalls von Schwellenwerten sw für die Leistungsaufnahme von der Ladeplanungseinrichtung LPE vorzugsweise auch Informationen von Schienenfahrzeugen SFC der dritten Anzahl Schienenfahrzeuge berücksichtigt. Diese aktuell in einem Fahrbetrieb befindlichen Schienenfahrzeuge ohne Energiespeicher übertragen beispielsweise neben einer fahrzeugindividuellen Identifikation id3 Informationen zu einer aktuellen Position pos und Geschwindigkeit vc sowie, sofern verfügbar, einen von der Steuerung ST des Schienenfahrzeugs SFC bestimmten zukünftigen Leistungsbedarf pd.

## Patentansprüche

1. Verfahren zum Steuern einer elektrischen Leistungsaufnahme einer Schienenfahrzeugflotte (SFF), wobei die Schienenfahrzeugflotte (SFF) eine Mehrzahl Schienenfahrzeuge (SFB1) umfasst, die jeweils zumindest einen elektrischen Energiespeicher (ES) für eine Versorgung eines Antriebssystems (AS) des Schienenfahrzeugs (SFB1) mit elektrischer Energie aufweisen, und wobei die Energiespeicher (ES) mittels eines elektrischen Versorgungsnetzes und/oder elektrischer Ladestationen entlang eines von der Schienenfahrzeugflotte (SFF) befahrenen Schienennetzes geladen werden,
**dadurch gekennzeichnet, dass**
- in einer zentralen Datenbasis (LIDB) zumindest
-- statische und zeitlich variierende Informationen (id1, pos, vc, bs, pd) aktuell in einem Fahrbetrieb befindlicher Schienenfahrzeuge (SFB1) der Mehrzahl Schienenfahrzeuge und
-- statische Informationen (fp) bezüglich eines jeweiligen Fahrplans und/oder Umlaufplans und/oder Fahrzeugeinsatzplans der aktuell betriebenen Schienenfahrzeuge (SFB1) zusammengeführt werden,
- mittels der zusammengeführten Informationen und unter Berücksichtigung einer Leistungsaufnahme der Schienenfahrzeugflotte (SFF) von einer Ladeplanungseinrichtung (LPE) ein fahrzeugindividueller Ladeplan (cp) für das Laden der Energiespeicher (ES) der aktuell in einem Fahrbetrieb befindlichen Schienenfahrzeuge (SFB1) bestimmt wird, und
- das Laden der Energiespeicher (ES) der aktuell in einem Fahrbetrieb befindlichen Schienenfahrzeuge (SFB1) abhängig von dem fahrzeugindividuell bestimmten Ladeplan (cp) durchgeführt wird.

2. Verfahren nach Anspruch 1, **dadurch gekennzeichnet, dass**
- in der zentralen Datenbasis (LIDB) ergänzend
-- statische und zeitlich variierende Informationen (id2, bs) zukünftig in einen Fahrbetrieb übergehender weiterer Schienenfahrzeuge (SFB2) der Mehrzahl Schienenfahrzeuge und
-- statische Informationen (fp) bezüglich des jeweiligen Fahrplans und/oder Umlaufplans und/oder Fahrzeugeinsatzplans der weiteren Schienenfahrzeuge (SFB2)
zusammengeführt werden,
- die statischen und zeitlich variierenden Informationen (id2, bs) der weiteren Schienenfahrzeuge (SFB2) von der Ladeplanungseinrichtung (LPE) für die Bestimmung des fahrzeugindividuellen Ladeplans (cp) für das Laden der Energiespeicher (ES) der aktuell in einem Fahrbetrieb befindlichen Schienenfahrzeuge (SFB1) ergänzend berücksichtigt werden,
- mittels der zusammengeführten Informationen von der Ladeplanungseinrichtung (LPE) ergänzend ein fahrzeugindividueller Ladeplan (cp) für das Laden der Energiespeicher (ES) der weiteren Schienenfahrzeuge (SFB2) unter Berücksichtigung einer Leistungsaufnahme der Schienenfahrzeugflotte (SFF) bestimmt wird, und
- das Laden der Energiespeicher (ES) der weiteren Schienenfahrzeug (SFB2) abhängig von dem fahrzeugindividuell bestimmten Ladeplan (cp) durchgeführt wird.

3. Verfahren nach Anspruch 1 oder 2, **dadurch gekennzeichnet, dass**
- in der zentralen Datenbasis (LIDB) ergänzend
-- statische und zeitlich variierende Informationen (id3, pos, vc, pd) von in einem Fahrbetrieb befindlichen anderen Schienenfahrzeugen (SFC) der Schienenfahrzeugflotte ohne elektrische Energiespeicher, wobei das Antriebssystem des jeweiligen anderen Schienenfahrzeugs (SFC) mittels des Versorgungsnetzes mit elektrischer Energie versorgt wird, und
-- statische Informationen (fp) bezüglich des jeweiligen Fahrplans und/oder Umlaufplans und/oder Fahrzeugeinsatzplans der anderen Schienenfahrzeuge (SFC)
zusammengeführt werden, und
- die statischen und zeitlich variierenden Informationen der anderen Schienenfahrzeug (id3, pos, vc, pd) von der Ladeplanungseinrichtung (LPE) für die Bestimmung des fahrzeugindividuellen Ladeplans (cp) für das Laden der Energiespeicher der aktuell in einem Fahrbetrieb befindlichen Schienenfahrzeuge (SFB1) und insbesondere der zukünftig in einen Fahrbetrieb übergehenden weiteren Schienenfahrzeuge (SFB2) ergänzend berücksichtigt werden.

4. Verfahren nach einem der vorstehenden Ansprüche, **dadurch gekennzeichnet, dass**
in der zentralen Datenbasis (LIDB) ergänzend
- zeitlich variierende Informationen (disp) bezüglich des jeweiligen Fahrplans und/oder Umlaufplans und/oder Fahrzeugeinsatzplans der Schienenfahrzeuge (SFB1, SFB2, SFC) zusammengeführt werden.

5. Verfahren nach einem der vorstehenden Ansprüche, **dadurch gekennzeichnet, dass**
- der fahrzeugindividuelle Ladeplan (cp) ergänzend für das Entladen der Energiespeicher (ES) der aktuell in einem Fahrbetrieb befindlichen Schienenfahrzeuge (SFB1) bestimmt wird, und
- das Entladen der Energiespeicher (ES) der aktuell in einem Fahrbetrieb befindlichen Schienenfahrzeuge (SFB1) abhängig von dem fahrzeugindividuell bestimmten Ladeplan (cp) durchgeführt wird.

6. Verfahren nach einem der vorstehenden Ansprüche, **dadurch gekennzeichnet, dass**
- der fahrzeugindividuelle Ladeplan (cp) ergänzend einen Schwellenwert (sw) für eine Leistungsaufnahme der aktuell in einem Fahrbetrieb befindlichen Schienenfahrzeuge (SFB1) und insbesondere der zukünftig in einen Fahrbetrieb übergehenden weiteren Schienenfahrzeuge (SFB2) bestimmt, und
- die Leistungsaufnahme der aktuell in einem Fahrbetrieb befindlichen Schienenfahrzeuge (SFB1) und insbesondere der zukünftig in einen Fahrbetrieb übergehenden weiteren Schienenfahrzeuge (SFB2) abhängig von dem fahrzeugindividuell bestimmten Schwellenwert (sw) gesteuert wird.

7. Verfahren nach einem der vorstehenden Ansprüche, **dadurch gekennzeichnet, dass**
die Informationen der aktuell in einem Fahrbetrieb befindlichen Schienenfahrzeugs (SFB1) und insbesondere der zukünftig in einen Fahrbetrieb übergehenden weiteren Schienenfahrzeuge (SFB2)
als statische Informationen eine oder mehrere der Informationen
- eine Identifikation (id1, id2),
- ein Fahrzeugtyp,
und als zeitlich variierende Informationen eine oder mehrere der Informationen:
- eine aktuelle Position (pos),
- eine aktuelle Geschwindigkeit (vc),
- einen aktuellen und/oder erwarteten Leistungsbedarf (pd),
- aktuelle und/oder historische Energieverbrauchswerte,
- einen aktuellen Ladezustand (bs) des zumindest einen Energiespeichers (ES),
umfassen.

8. Verfahren nach einem der vorstehenden Ansprüche, **dadurch gekennzeichnet, dass**
die Schienenfahrzeuge (SFB1, SFB2, SFC) der Schienenfahrzeugflotte (SFF) und die zentrale Datenbasis (LIDB) und/oder die Ladeplanungseinrichtung (LPE) jeweils eine Kommunikationsschnittstelle (FS, KS1) aufweisen, wobei über die Kommunikationsschnittstellen (FS, KS1) die statischen und zeitlich variierenden Informationen (id1, id2, id3, pos, vc, bs, pd) der Schienenfahrzeuge (SFB1, SFB2, SFC) zu der zentralen Datenbasis (LIDB) und die bestimmten fahrzeugindividuellen Ladepläne (cp) oder jeweilige Informationen zu den Ladeplänen zu den Schienenfahrzeugen (SFB1, SFB2, SFC) übertragen werden.

9. Verfahren nach einem der vorstehenden Ansprüche, **dadurch gekennzeichnet, dass**
die zentrale Datenbasis (LIDB) und eine zentrale Fahrplan- und Umlaufplan-Datenbasis (FPDB) jeweils eine Kommunikationsschnittstelle (KS1, KS2) zu der Ladeplanungseinrichtung (LPE) aufweisen, wobei über die Kommunikationsschnittstellen (KS1, KS2) die statischen und insbesondere zeitlich variierenden Informationen (fp, disp) bezüglich eines jeweiligen Fahrplans und/oder Umlaufplans und/oder Fahrzeugeinsatzplans der aktuell betriebenen Schienenfahrzeuge (SFB1) und insbesondere der zukünftig in einen Fahrbetrieb übergehenden weiteren Schienenfahrzeuge (SFB2) und/oder der anderen Schienenfahrzeuge (SFC) der Schienenfahrzeugflotte (SFF) übertragen werden.

10. Anordnung (LSA) zur Steuerung einer elektrischen Leistungsaufnahme einer Schienenfahrzeugflotte (SFF), wobei die Anordnung (LSA) zumindest eine zentrale Datenbasis (LIDB) und eine Ladeplanungseinrichtung (LPE) umfasst, wobei zumindest eine Mehrzahl Schienenfahrzeuge (SFB1, SFB2) der Schienenfahrzeugflotte (SFF) kommunikationstechnisch mit der zentralen Datenbasis (LIDB) und/oder der Ladeplanungseinrichtung (LPE) verbunden ist, wobei die Schienenfahrzeuge (SFB1, SFB2) jeweils zumindest einen elektrischen Energiespeicher (ES) für eine Versorgung eines Antriebssystems (AS) mit elektrischer Energie aufweisen, welche mittels eines elektrischen Versorgungsnetzes und/oder elektrischer Ladestationen entlang eines von der Schienenfahrzeugflotte befahrenen Schienennetzes ladbar sind, und wobei die Anordnung (LSA) ausgestaltet ist, das Verfahren nach einem der Ansprüche 1 bis 9 durchzuführen.

11. Schienenfahrzeug (SFB1, SFB2) einer Schienenfahrzeugflotte (SFF), wobei das Schienenfahrzeug (SFB1, SFB2) zumindest umfasst
- ein Antriebssystem (AS) und zumindest einen elektrischen Energiespeicher (ES), wobei der zumindest eine Energiespeicher (ES) einer Versorgung des Antriebssystems (AS) mit elektrischer Energie dient,
- eine Kommunikationsschnittstelle (FS) zum Übertragen statischer und zeitlich variierender Informationen (id1, id2, pos, vc, bs, pd) an eine der Schienenfahrzeugflotte (SFF) zugeordnete Anordnung (LSA), wobei die Anordnung (LSA) zumindest eine zentrale Datenbasis (LIDB) und eine Ladeplanungseinrichtung (LPE) umfasst, und zum Empfangen eines Ladeplans (cp), wobei der Ladeplan (cp) von der Ladeplanungseinrichtung (LPE) mittels in der zentralen Datenbasis (LIDB) zusammengeführter Informationen des Schienenfahrzeugs (SFB1, SFB2) sowie statischer und zeitlich variierender Informationen (id1, pos, vc, bs, pd) aktuell in einem Fahrbetrieb befindlicher weiterer Schienenfahrzeuge (SFB1) der Schienenfahrzeugflotte (SFF), statischer Informationen (fp) bezüglich eines Fahrplans und/oder Umlaufplan und/oder Fahrzeugeinsatzplans des Schienenfahrzeugs (SFB1, SFB2) und unter Berücksichtigung einer Leistungsaufnahme der Schienenfahrzeugflotte (SFF) bestimmt wird, und
- eine Schienenfahrzeugsteuerung (ST) zum Steuern des Ladens des zumindest einen Energiespeichers (ES) abhängig von dem empfangenen Ladeplan (cp).
